# EUROPEAN PATENT APPLICATION

(11) **EP 4 826 171 A1**
(43) Date of publication of application: **21.10.2026**
(21) Application number: 24917326.1
(22) Date of filing: 17.12.2024
(51) Int. Cl.: E02F 9/22, F15B 11/08, F15B 21/14, F15B 13/02, F15B 13/04, F16K 3/26, F16K 3/32

(54) **CONSTRUCTION MACHINE**

(30) Priority: 09.01.2024 KR 20240003774
(71) Applicant: HD Construction Equipment Co., Ltd., Seongnam-si, Gyeonggi-do 13553 (KR)
(72) Inventor: SEO, Areum, Incheon 22021 (KR); CHO, Yonglak, Seongnam-si, Gyeonggi-do 13483 (KR); TAK, Hyeonggyun, Incheon 22758 (KR)
(74) Representative: Isarpatent
(86) International application number: PCT/KR2024/020477
(87) International publication number: WO 2025/150731

(57) **Abstract**

The present disclosure relates to a construction machine. The construction machine includes a pump unit connected to an engine, a pump line through which a flow rate is discharged from the pump unit, a main control valve configured to provide communication between the pump line and a plurality of actuators, a regeneration line configured to provide communication between at least one of the plurality of actuators and the pump line, and a control unit configured to determine a regeneration flow rate of the regeneration line according to a mode and control the pump unit. Accordingly, performance and fuel efficiency may be improved.

## Description

### [Technical Field]

The present disclosure relates to a construction machine, and more particularly, to a construction machine configured to perform civil engineering work or architectural work.

### [Background Art]

Generally, a construction machine is a machine used for civil engineering work or architectural work, such as an excavator or a loader. The construction machine includes a lower traveling unit capable of moving along the ground, an upper swinging unit rotatably provided on an upper portion of the lower traveling unit, a boom rotatably coupled to the upper swinging unit, a hydraulic circuit for operating the upper swinging unit and the boom, and a control unit configured to control the hydraulic circuit.

However, in the conventional construction machine, there has been a problem in that performance and fuel efficiency are deteriorated.

### [Summary of Invention]

### [Technical Problem]

Accordingly, embodiments of the present disclosure provide a construction machine that may improve performance and fuel efficiency.

### [Technical Solution]

To achieve the above objects, the present disclosure provides a construction machine comprising: a pump unit connected to an engine; a pump line through which a flow rate is discharged from the pump unit; a main control valve configured to provide communication between the pump line and a plurality of actuators; a regeneration line configured to provide communication between at least one of the plurality of actuators and the pump line; and a control unit configured to determine a regeneration flow rate of the regeneration line according to a mode and control the pump unit.

The plurality of actuators includes a swing actuator and a boom actuator, and a swing line providing communication between the main control valve and the swing actuator and a boom line providing communication between the main control valve and the boom actuator are provided. The regeneration line may be configured to provide communication between at least one of the swing line and the boom line and the pump line.

When a flow rate of fluid supplied to the main control valve through the pump line is a supply flow rate, a flow rate of fluid supplied by the pump unit to the pump line is a pump flow rate, and a flow rate of fluid supplied to the pump line through the regeneration line is the regeneration flow rate, the control unit may be configured to determine the pump flow rate from a difference between the supply flow rate and the regeneration flow rate, which are determined according to a mode, and to control to drive the pump unit.

The supply flow rate, which is the flow rate of fluid supplied to the main control valve through the pump line, may be a sum of a basic supply flow rate determined according to an input value of an operator and an additional supply flow rate which is a flow rate exceeding the basic supply flow rate.

The additional supply flow rate is determined by multiplying a maximum regeneration flow rate, which is a maximum value of the regeneration flow rate, by a predetermined performance constant, and the performance constant may be determined in a range of 0 to 1 according to the mode.

In a case of a normal mode, the regeneration line may be deactivated.

In a case of a regeneration mode, the regeneration line may be activated.

In a case of a fuel efficiency mode, the regeneration flow rate of the regeneration line is increased, and the pump flow rate supplied by the pump unit to the pump line may be decreased based on the increased regeneration flow rate.

In a case of a performance mode, the regeneration flow rate of the regeneration line is increased, and the pump flow rate supplied by the pump unit to the pump line may be maintained.

In a case of a combined mode, the regeneration flow rate of the regeneration line is increased and the pump flow rate supplied by the pump unit to the pump line may be decreased according to a ratio determined in the combined mode.

The regeneration flow rate is determined by multiplying the maximum regeneration flow rate, which is a maximum value of the regeneration flow rate, by a predetermined regeneration constant, and the regeneration constant may be determined in a range of 0 to 1 according to the mode.

In a case of the normal mode, the regeneration constant may be determined to be 0.

In a case of the regeneration mode, the regeneration constant may be determined as a maximum value currently possible in a range of 0 to 1.

The regeneration line includes a high-pressure accumulator for storing and discharging fluid and a merging flow path configured to provide communication between the high-pressure accumulator and the pump line, and the control unit may be configured to open and close the merging flow path such that a predetermined flow rate flows from the high-pressure accumulator to the pump line under predetermined conditions.

An operator selects a target actuator from the plurality of actuators, and the control unit may be configured to open the merging flow path when the target actuator is operated under predetermined conditions.

The merging flow path is opened when a pressure of the target actuator is greater than a predetermined reference pressure, the merging flow path is opened when the pressure of the target actuator is equal to or less than the predetermined reference pressure and an output of the pump unit is greater than a predetermined reference output, and the merging flow path may be opened when a pressure of the high-pressure accumulator is greater than a predetermined value.

The operator sets a predetermined ratio for each of the target actuator and the pump unit, and the control unit may be configured to control the merging flow path such that a maximum value among calculated flow rates, obtained by multiplying the ratio by a maximum flow rate that may flow from the high-pressure accumulator to the pump line, flows from the high-pressure accumulator to the pump line.

The pump unit includes a first pump and a second pump, and the pump line includes a first pump line communicating with the first pump and a second pump line communicating with the second pump. The target actuator includes a first target actuator communicating with the first pump line and a second target actuator communicating with the second pump line, and the merging flow path may include a first merging line communicating with the first pump line and a second merging line communicating with the second pump line.

A first ratio for the first target actuator, a second ratio for the second target actuator, a third ratio for the first pump, and a fourth ratio for the second pump are set by the operator. The control unit may be configured to calculate: a first calculated flow rate obtained by multiplying a maximum flow rate that may flow from the high-pressure accumulator to the first pump line for the operation of the first target actuator by the first ratio; a second calculated flow rate obtained by multiplying a maximum flow rate that may flow from the high-pressure accumulator to the second pump line for the operation of the second target actuator by the second ratio; a third calculated flow rate obtained by multiplying a maximum flow rate that may flow from the high-pressure accumulator to the first pump line for the operation of the first pump by the third ratio; and a fourth calculated flow rate obtained by multiplying a maximum flow rate that may flow from the high-pressure accumulator to the second pump line for the operation of the second pump by the fourth ratio.

The control unit may be configured to control the first merging line and the second merging line such that a maximum value among the first calculated flow rate, the second calculated flow rate, the third calculated flow rate, and the fourth calculated flow rate flows from the high-pressure accumulator to the pump line.

The control unit may be configured to control: the first calculated flow rate to flow through the first merging line when the maximum value is the first calculated flow rate; the second calculated flow rate to flow through the second merging line when the maximum value is the second calculated flow rate; the third calculated flow rate to flow through the first merging line when the maximum value is the third calculated flow rate; and the fourth calculated flow rate to flow through the second merging line when the maximum value is the fourth calculated flow rate.

The regeneration line includes a high-pressure accumulator for storing and discharging fluid and a merging flow path configured to provide communication between the high-pressure accumulator and the pump line, and a target actuator selector through which an operator selects a target actuator from the plurality of actuators is provided. The control unit may be configured to open and close the merging flow path such that fluid of the high-pressure accumulator flows to the pump line based on a total flow rate required by the pump unit when the target actuator is operated.

### [Advantageous Effects]

The construction machine according to the present disclosure includes a pump unit connected to an engine; a pump line through which a flow rate is discharged from the pump unit; a main control valve configured to provide communication between the pump line and a plurality of actuators; a regeneration line configured to provide communication between at least one of the plurality of actuators and the pump line; and a control unit configured to determine a regeneration flow rate of the regeneration line according to a mode and control the pump unit. Accordingly, performance and fuel efficiency may be improved.

### [Brief Description of the Drawings]

FIG. 1 is a front view illustrating a construction machine according to an embodiment of the present disclosure.
FIG. 2 is a schematic diagram illustrating a hydraulic circuit in the construction machine of FIG. 1.
FIG. 3 is a schematic diagram for explaining an operating principle of the hydraulic circuit of FIG. 2, illustrating a flow rate in a normal mode.
FIG. 4 is a schematic diagram for explaining an operating principle of the hydraulic circuit of FIG. 2, illustrating a flow rate in a fuel efficiency mode among regeneration modes.
FIG. 5 is a schematic diagram for explaining an operating principle of the hydraulic circuit of FIG. 2, illustrating a flow rate in a performance mode among regeneration modes.
FIG. 6 is a schematic diagram for explaining an operating principle of the hydraulic circuit of FIG. 2, illustrating a flow rate in a combined mode among regeneration modes.
FIG. 7 is a flowchart illustrating logic for selecting a pump to be merged in the hydraulic circuit of FIG. 2.
FIG. 8 is a schematic diagram illustrating a flow of fluid in the hydraulic circuit of FIG. 2 during a boom-down operation in the normal mode.
FIG. 9 is a schematic diagram illustrating a flow of fluid in the hydraulic circuit of FIG. 2 when the fluid is stored in a high-pressure accumulator during a boom-down operation in the regeneration mode.
FIG. 10 is a schematic diagram illustrating a flow of fluid in the hydraulic circuit of FIG. 2 when the fluid cannot be stored in the high-pressure accumulator during a boom-down operation in the regeneration mode.
FIG. 11 is a schematic diagram illustrating a flow of fluid in the hydraulic circuit of FIG. 2 when the fluid is merged into the pump unit without passing through the high-pressure accumulator during a boom-down operation in the regeneration mode.
FIG. 12 is a schematic diagram illustrating a flow of fluid in the hydraulic circuit of FIG. 2 during a boom-up operation in the normal mode.
FIG. 13 is a schematic diagram illustrating a flow of fluid in the hydraulic circuit of FIG. 2 during a boom-up operation in the regeneration mode.
FIG. 14 is a schematic diagram illustrating a flow of fluid in the hydraulic circuit of FIG. 2 during a swing-acceleration operation in the normal mode.
FIG. 15 is a schematic diagram illustrating a flow of fluid in the hydraulic circuit of FIG. 2 during a swing-acceleration operation in the regeneration mode.
FIG. 16 is a schematic diagram illustrating a flow of fluid in the hydraulic circuit of FIG. 2 during a swing-deceleration operation in the normal mode.
FIG. 17 is a schematic diagram illustrating a flow of fluid in the hydraulic circuit of FIG. 2 when the fluid is stored in the high-pressure accumulator during a swing-deceleration operation in the regeneration mode.
FIG. 18 is a schematic diagram illustrating a flow of fluid in the hydraulic circuit of FIG. 2 when the fluid cannot be stored in the high-pressure accumulator or merging into a first pump is required during a swing-deceleration operation in the regeneration mode.
FIG. 19 is a schematic diagram illustrating a flow of fluid in the hydraulic circuit of FIG. 2 during a jack-up operation in the regeneration mode.
FIG. 20 is a schematic diagram illustrating a flow of fluid in the hydraulic circuit of FIG. 2 during an idle operation in the normal mode.
FIG. 21 is a flowchart illustrating logic for determining a condition and a flow rate for merging fluid into a pump in a hydraulic circuit of a construction machine according to another embodiment of the present disclosure.
FIG. 22 is a schematic diagram for explaining an operating principle of the hydraulic circuit controlled according to the logic of FIG. 21, illustrating a flow rate when merging does not occur because an output of the pump unit is small.
FIG. 23 is a schematic diagram for explaining an operating principle of the hydraulic circuit controlled according to the logic of FIG. 21, illustrating a flow rate when the output of the pump unit is small but an operator desires merging to occur when a bucket actuator is operated.

### [Description of Embodiments]

Hereinafter, a construction machine according to the present disclosure will be described in detail with reference to the accompanying drawings.

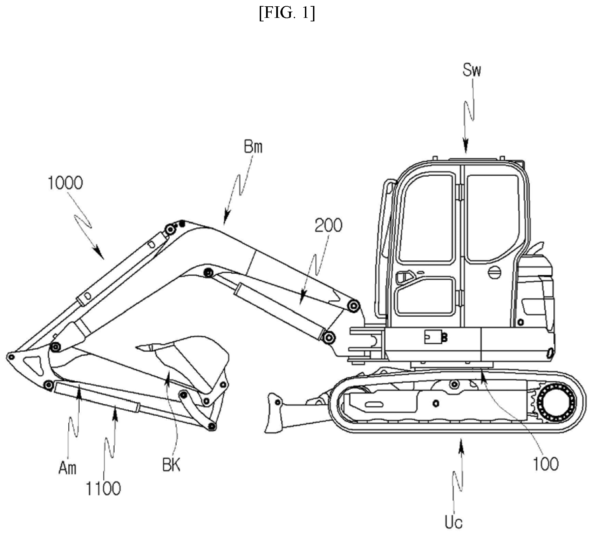

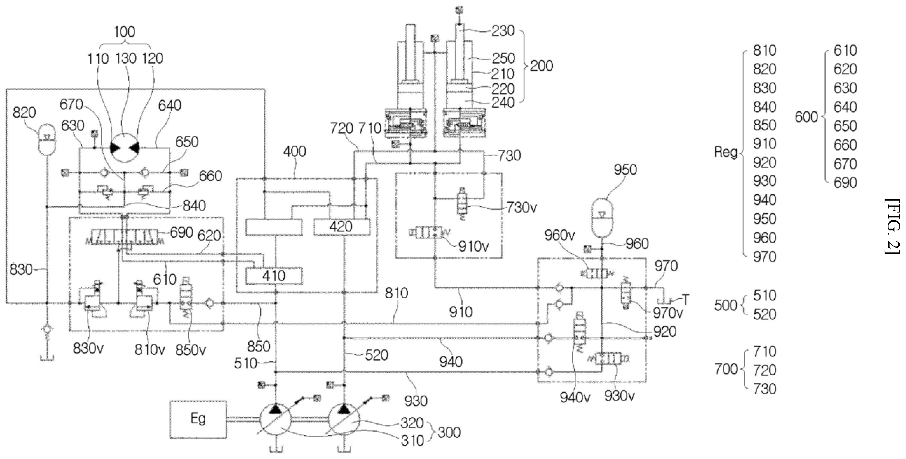

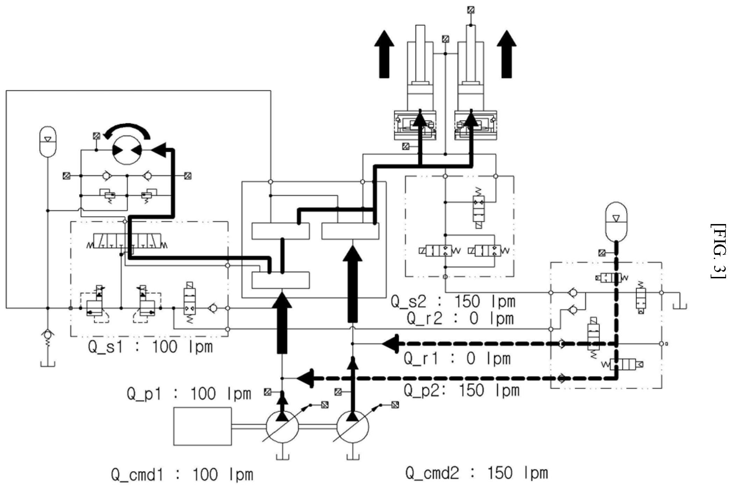

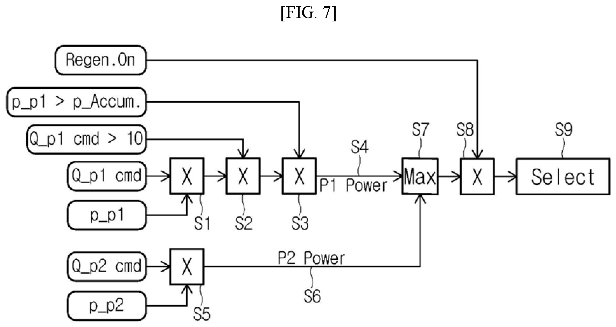

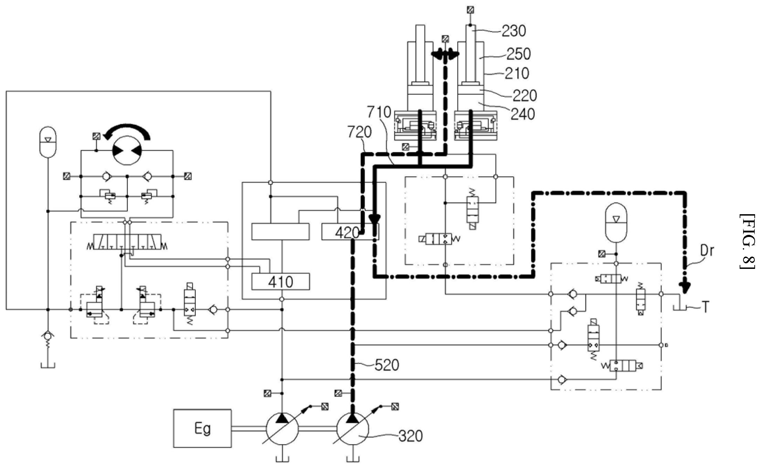

FIG. 1 is a front view illustrating a construction machine according to an embodiment of the present disclosure, and FIG. 2 is a schematic diagram illustrating a hydraulic circuit in the construction machine of FIG. 1. FIGS. 3 to 6 are schematic diagrams for explaining an operating principle of the hydraulic circuit of FIG. 2. FIG. 7 is a flowchart illustrating logic for selecting a pump to be merged in the hydraulic circuit of FIG. 2. FIGS. 8 to 20 are schematic diagrams illustrating a flow of fluid in the hydraulic circuit of FIG. 2 according to modes and operations.

Referring to FIG. 1, a construction machine according to an embodiment of the present disclosure may include a lower traveling unit Uc capable of moving along the ground, an upper swinging unit Sw rotatably provided on an upper portion of the lower traveling unit Uc, a boom Bm rotatably coupled to the upper swinging unit Sw, an arm Am rotatably coupled to a distal end portion of the boom Bm, a bucket Bk rotatably coupled to a distal end portion of the arm Am, a hydraulic circuit for operating the upper swinging unit Sw, the boom Bm, the arm Am, and the bucket Bk, and a control unit configured to control the hydraulic circuit.

Referring to FIG. 2, the hydraulic circuit may include a swing actuator 100 for rotating the upper swinging unit Sw, a boom actuator 200 for rotating the boom Bm, a pump unit 300 driven by receiving power from an engine Eg, a main control valve 400 for transferring fluid transported by the pump unit 300 to the swing actuator 100 and the boom actuator 200, a pump line 500 configured to provide communication between the pump unit 300 and the main control valve 400, a swing line 600 configured to provide communication between the main control valve 400 and the swing actuator 100, and a boom line 700 configured to provide communication between the main control valve 400 and the boom actuator 200.

The swing actuator 100 may include a first opening 110 and a second opening 120 communicating with each other, and a rotor 130 connected to the upper swinging unit Sw and configured to rotate in one direction and an opposite direction according to a flow direction of fluid between the first opening 110 and the second opening 120.

The boom actuator 200 may include a cylinder 210 connected to the upper swinging unit Sw, a piston 220 capable of reciprocating inside the cylinder 210, and a rod 230 extending from the piston 220 to the outside of the cylinder 210 and connected to the boom Bm.

Here, the inside of the cylinder 210 is divided into a pair of chambers 240 and 250 by the piston 220, and the pair of chambers 240 and 250 may include a rod chamber 250 in which the rod 230 is received and a head chamber 240 which is a chamber on the opposite side of the rod chamber 250.

The pump unit 300 may include a first pump 310 and a second pump 320 connected in parallel to the engine Eg.

The main control valve 400 may include a swing main control valve 410 for transferring fluid to the swing actuator 100 and a boom main control valve 420 for transferring fluid to the boom actuator 200.

The pump line 500 may include a first pump line 510 configured to provide communication between the first pump 310 and the swing main control valve 410, and a second pump line 520 configured to provide communication between the second pump 320 and the boom main control valve 420.

The swing line 600 may include a swing direction control valve 690 for controlling a flow direction of fluid in the swing line 600, a first swing line 610 configured to provide communication between the swing direction control valve 690 and one side of the swing main control valve 410, a second swing line 620 configured to provide communication between the swing direction control valve 690 and the other side of the swing main control valve 410, a third swing line 630 configured to provide communication between the swing direction control valve 690 and the first opening 110 of the swing actuator 100, a fourth swing line 640 configured to provide communication between the swing direction control valve 690 and the second opening 120 of the swing actuator 100, a fifth swing line 650 configured to allow fluid to be discharged to the third swing line 630 and the fourth swing line 640 while not allowing fluid to be introduced from the third swing line 630 and the fourth swing line 640, a sixth swing line 660 configured to allow fluid to be introduced from the third swing line 630 and the fourth swing line 640 while not allowing fluid to be discharged to the third swing line 630 and the fourth swing line 640, and a seventh swing line 670 configured to provide communication between the fifth swing line 650 and the sixth swing line 660.

The boom line 700 may include a head line 710 configured to provide communication between the boom main control valve 420 and the head chamber 240, a rod line 720 configured to provide communication between the main control valve 400 and the rod chamber 250, a cavitation line 730 configured to provide communication between the head line 710 and the rod line 720, and a cavitation valve 730v configured to open and close the cavitation line 730.

Here, the hydraulic circuit according to the present embodiment may further include a regeneration line Reg configured to provide communication between at least one of the swing line 600 and the boom line 700 and the pump line 500.

Specifically, the regeneration line Reg may include a swing regeneration line 810 configured to communicate with and be shielded from the swing line 600 by the swing direction control valve 690, a swing regeneration valve 810v configured to open and close the swing regeneration line 810, a low-pressure accumulator 820 for storing and discharging low-pressure fluid, a low-pressure accumulator line 830 configured to provide communication between the low-pressure accumulator 820 and the swing regeneration line 810, a low-pressure accumulator valve 830v configured to open and close the low-pressure accumulator line 830, and a make-up line 840 configured to provide communication between the low-pressure accumulator line 830 and the fifth swing line 650, the sixth swing line 660, and the seventh swing line 670.

Also, the regeneration line Reg may further include a boom regeneration line 910 branched from the cavitation line 730, and a boom regeneration valve 910v configured to open and close the boom regeneration line 910.

Also, the regeneration line Reg may further include a first merging line 930 communicating with the first pump line 510, a first merging valve 930v configured to open and close the first merging line 930, a second merging line 940 communicating with the second pump line 520, a second merging valve 940v configured to open and close the second merging line 940, and a terminal line 920 configured to provide communication between the swing regeneration line 810 and the boom regeneration line 910 and the first merging line 930 and the second merging line 940.

Also, the regeneration line Reg may further include a high-pressure accumulator 950 for storing and discharging high-pressure fluid, a high-pressure accumulator line 960 configured to provide communication between the terminal line 920 and the high-pressure accumulator 950, and a high-pressure accumulator valve 960v configured to open and close the high-pressure accumulator line 960.

Also, the regeneration line Reg may further include a tank T for storing discharged fluid, a safety line 970 configured to provide communication between the terminal line 920 and the tank T, and a safety valve 970v configured to open and close the safety line 970.

Here, the tank T may also communicate with the main control valve 400 through a drain line Dr.

Also, the regeneration line Reg may further include a third merging line 850 branched from the swing regeneration line 810 and communicating with the first pump line 510, and a third merging valve 850v configured to open and close the third merging line 850.

The control unit may be configured to improve fuel efficiency and performance by using such a hydraulic circuit.

Specifically, a flow rate of fluid supplied to the main control valve 400 through the pump line 500 is referred to as a supply flow rate (Q_s1, Q_s2), a flow rate of fluid supplied by the pump unit 300 to the pump line 500 is referred to as a pump flow rate (Q_p1, Q_p2), and a flow rate of fluid supplied to the pump line 500 through the regeneration line Reg is referred to as a regeneration flow rate (Q_r1, Q_r2). In this case, the control unit may be configured to determine the pump flow rate (Q_p1, Q_p2) from a difference between the supply flow rate (Q_s1, Q_s2), which is determined according to a mode, and the regeneration flow rate (Q_r1, Q_r2), and to drive the pump unit 300.

Here, the supply flow rate (Q_s1, Q_s2) is a sum of a basic supply flow rate (Q_cmd1, Q_cmd2), which is a minimum flow rate required to operate the swing actuator 100 and the boom actuator 200, and an additional supply flow rate (Q_add1, Q_add2), which is a flow rate exceeding the basic supply flow rate (Q_cmd1, Q_cmd2). The basic supply flow rate (Q_cmd1, Q_cmd2) is determined according to an input value of an operator, and the additional supply flow rate (Q_add1, Q_add2) is determined by multiplying a maximum regeneration flow rate (Q_max1, Q_max2), which is a maximum value of the regeneration flow rate (Q_r1, Q_r2), by a predetermined performance constant. The performance constant may be determined in a range of 0 to 1 according to the mode.

Also, the regeneration flow rate (Q_r1, Q_r2) is determined by multiplying the maximum regeneration flow rate (Q_max1, Q_max2) by a predetermined regeneration constant, and the regeneration constant may be determined in a range of 0 to 1 according to the mode.

More specifically, referring to FIG. 3, the operator may select a normal mode in which the regeneration line Reg is deactivated and input the basic supply flow rate (Q_cmd1, Q_cmd2) as 250 lpm (Q_cmd1: 100 lpm, Q_cmd2: 150 lpm) through a joystick. In this case, the performance constant is determined to be 0, the additional supply flow rate (Q_add1, Q_add2) is determined to be 0 lpm (Q_add1: 0 lpm, Q_add2: 0 lpm), and the supply flow rate (Q_s1, Q_s2) may be determined to be 250 lpm (Q_s1: 100 lpm, Q_s2: 150 lpm). Also, the regeneration constant is determined to be 0, and the regeneration flow rate (Q_r1, Q_r2) may be determined to be 0 lpm (Q_r1: 0 lpm, Q_r2: 0 lpm). Accordingly, the pump flow rate (Q_p1, Q_p2) is determined to be 250 lpm (Q_p1: 100 lpm, Q_p2: 150 lpm), which is obtained by subtracting the regeneration flow rate (Q_r1, Q_r2) from the supply flow rate (Q_s1, Q_s2), and the pump unit 300 may be controlled to discharge the determined flow rate.

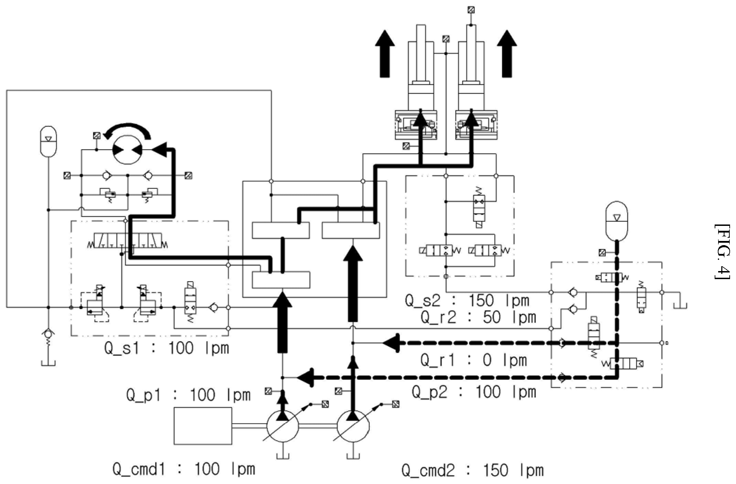

On the other hand, referring to FIG. 4, an operator may select a fuel efficiency mode among regeneration modes in which the regeneration line Reg is activated and input the basic supply flow rate (Q_cmd1, Q_cmd2) as 250 lpm (Q_cmd1: 100 lpm, Q_cmd2: 150 lpm) through a joystick. In this case, the performance constant is determined to be 0, the additional supply flow rate (Q_add1, Q_add2) is determined to be 0 lpm (Q_add1: 0 lpm, Q_add2: 0 lpm), and the supply flow rate (Q_s1, Q_s2) may be determined to be 250 lpm (Q_s1: 100 lpm, Q_s2: 150 lpm). Meanwhile, the regeneration constant is determined as a maximum value currently possible in a range of 0 to 1. Assuming that the maximum value currently possible among the regeneration constants is 1 and the maximum regeneration flow rate (Q_max1, Q_max2) is 50 lpm, the regeneration flow rate (Q_r1, Q_r2) may be determined to be 50 lpm (Q_r1: 0 lpm, Q_r2: 50 lpm), which is obtained by multiplying the maximum regeneration flow rate (Q_max1, Q_max2) by the regeneration constant. Accordingly, the pump flow rate (Q_p1, Q_p2) is determined to be 200 lpm (Q_p1: 100 lpm, Q_p2: 100 lpm), which is obtained by subtracting the regeneration flow rate (Q_r1, Q_r2) from the supply flow rate (Q_s1, Q_s2), and the pump unit 300 may be controlled to discharge the determined flow rate. In this case, compared to the case of FIG. 3, energy required for the pump unit 300 is saved, and thus fuel efficiency may be improved.

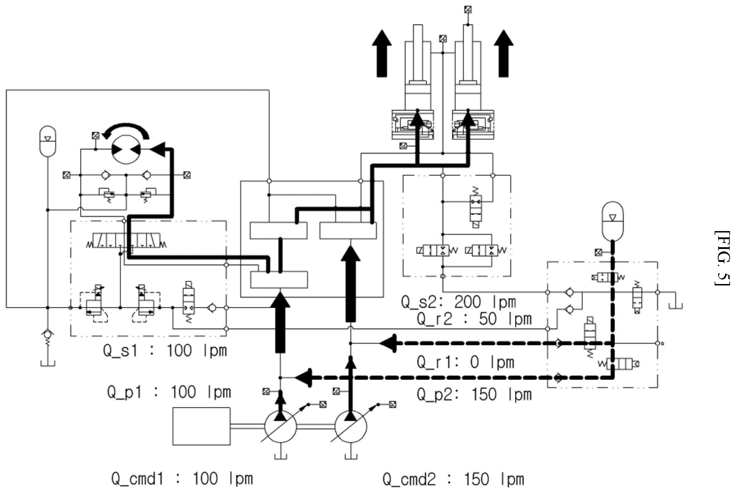

Alternatively, referring to FIG. 5, the operator may select a performance mode among the regeneration modes and input the basic supply flow rate (Q_cmd1, Q_cmd2) as 250 lpm (Q_cmd1: 100 lpm, Q_cmd2: 150 lpm) through a joystick. In this case, the performance constant is determined to be 1, and assuming that the maximum regeneration flow rate (Q_max1, Q_max2) is 50 lpm, the additional supply flow rate (Q_add1, Q_add2) is determined to be 50 lpm (Q_add1: 0 lpm, Q_add2: 50 lpm), and the supply flow rate (Q_s1, Q_s2) may be determined to be 300 lpm (Q_s1: 100 lpm, Q_s2: 200 lpm), which is a sum of the basic supply flow rate (Q_cmd1, Q_cmd2) and the additional supply flow rate (Q_add1, Q_add2). Meanwhile, the regeneration constant is determined as a maximum value currently possible in a range of 0 to 1. Assuming that the maximum value currently possible among the regeneration constants is 1, the regeneration flow rate (Q_r1, Q_r2) may be determined to be 50 lpm (Q_r1: 0 lpm, Q_r2: 50 lpm), which is obtained by multiplying the maximum regeneration flow rate (Q_max1, Q_max2) by the regeneration constant. Accordingly, the pump flow rate (Q_p1, Q_p2) is determined to be 250 lpm (Q_p1: 100 lpm, Q_p2: 150 lpm), which is obtained by subtracting the regeneration flow rate (Q_r1, Q_r2) from the supply flow rate (Q_s1, Q_s2), and the pump unit 300 may be controlled to discharge the determined flow rate. In this case, compared to the case of FIG. 3, the energy required for the pump unit 300 is the same, so there is no improvement in fuel efficiency, but the flow rate of fluid supplied to the main control valve 400 is increased, and thus performance may be improved.

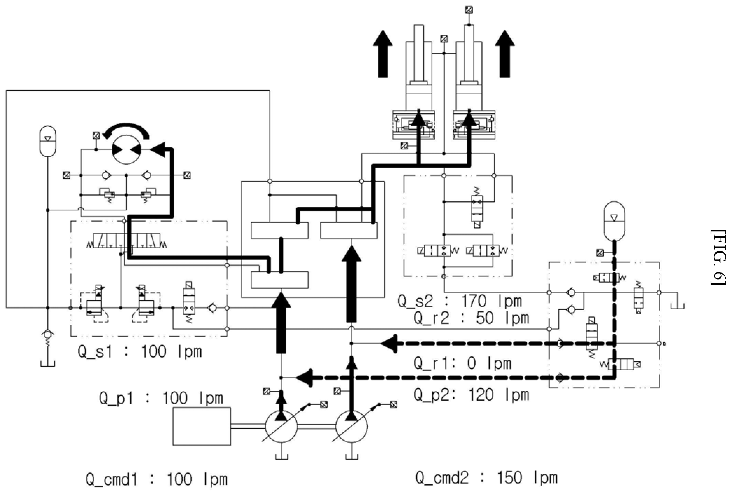

Alternatively, referring to FIG. 6, the operator may select a combined mode among the regeneration modes and input the basic supply flow rate (Q_cmd1, Q_cmd2) as 250 lpm (Q_cmd1: 100 lpm, Q_cmd2: 150 lpm) through a joystick. In this case, the performance constant is determined as a value desired by the operator in a range of more than 0 and less than 1. Assuming that the operator desires 0.4 as the performance constant and the maximum regeneration flow rate (Q_max1, Q_max2) is 50 lpm, the additional supply flow rate (Q_add1, Q_add2) is determined to be 20 lpm (Q_add1: 0 lpm, Q_add2: 20 lpm), and the supply flow rate (Q_s1, Q_s2) may be determined to be 270 lpm (Q_s1: 100 lpm, Q_s2: 170 lpm), which is a sum of the basic supply flow rate (Q_cmd1, Q_cmd2) and the additional supply flow rate (Q_add1, Q_add2). Meanwhile, the regeneration constant is determined as a maximum value currently possible in a range of 0 to 1. Assuming that the maximum value currently possible among the regeneration constants is 1, the regeneration flow rate (Q_r1, Q_r2) may be determined to be 50 lpm (Q_r1: 0 lpm, Q_r2: 50 lpm), which is obtained by multiplying the maximum regeneration flow rate (Q_max1, Q_max2) by the regeneration constant. Accordingly, the pump flow rate (Q_p1, Q_p2) is determined to be 220 lpm (Q_p1: 100 lpm, Q_p2: 120 lpm), which is obtained by subtracting the regeneration flow rate (Q_r1, Q_r2) from the supply flow rate (Q_s1, Q_s2), and the pump unit 300 may be controlled to discharge the determined flow rate. In this case, the fuel efficiency improvement effect is reduced compared to the case of FIG. 4, and the performance improvement effect is reduced compared to the case of FIG. 5, but fuel efficiency and performance may be improved compared to the case of FIG. 3.

Meanwhile, although it is assumed that the second merging line 940 is opened in the cases of FIGS. 4 to 6, the control unit may be configured to open one of the first merging line 930 and the second merging line 940 having higher regeneration efficiency.

That is, the control unit compares an output (P1 Power) required for the first pump 310 and an output (P2 Power) required for the second pump 320 according to logic shown in FIG. 7. When the output (P1 Power) required for the first pump 310 is greater than the output (P2 Power) required for the second pump 320, the control unit may be configured to open the first merging line 930 with a first merging valve 930v and close the second merging line 940 with a second merging valve 940v. When the output (P1 Power) required for the first pump 310 is less than the output (P2 Power) required for the second pump 320, the control unit may be configured to close the first merging line 930 with the first merging valve 930v and open the second merging line 940 with the second merging valve 940v.

Specifically, the logic shown in FIG. 7 includes: a first pump information inputting step (S1) of receiving a pressure (p_p1) of the first pump 310 and a required flow rate (Q_p1 cmd) for the first pump 310; a first pump output calculating step (S4) of calculating the output (P1 Power) required for the first pump 310 by multiplying the pressure (p_p1) of the first pump 310 and the required flow rate (Q_p1 cmd) for the first pump 310; a second pump information inputting step (S5) of receiving a pressure (p_p2) of the second pump 320 and a required flow rate (Q_p2 cmd) for the second pump 320; a second pump output calculating step (S6) of calculating the output (P2 Power) required for the second pump 320 by multiplying the pressure (p_p2) of the second pump 320 and the required flow rate (Q_p2 cmd) for the second pump 320; a pump output comparing step (S7) of comparing the output (P1 Power) required for the first pump 310 and the output (P2 Power) required for the second pump 320; and a merging line selecting step (S9) of opening the first merging line 930 with the first merging valve 930v and closing the second merging line 940 with the second merging valve 940v when the output (P1 Power) required for the first pump 310 is greater than the output (P2 Power) required for the second pump 320, and closing the first merging line 930 with the first merging valve 930v and opening the second merging line 940 with the second merging valve 940v when the output (P1 Power) required for the first pump 310 is less than the output (P2 Power) required for the second pump 320. The control unit may be configured to control the regeneration line Reg according to the logic.

Here, the logic includes a first pump flow rate comparing step (S2) of comparing the required flow rate (Q_p1 cmd) for the first pump 310 with a predetermined reference flow rate (e.g., 10 lpm) between the first pump information inputting step (S1) and the first pump output calculating step (S4). The logic may be formed such that the first pump output calculating step (S4) is performed when it is determined in the first pump flow rate comparing step (S2) that the required flow rate (Q_p1 cmd) for the first pump 310 is greater than the reference flow rate.

Also, the logic includes a first pump pressure comparing step (S3) of comparing the pressure (p_p1) of the first pump 310 with a predetermined reference pressure (e.g., an accumulator pressure (p_Accm.)) between the first pump information inputting step (S1) and the first pump output calculating step (S4). The logic may be formed such that the first pump output calculating step (S4) is performed when it is determined in the first pump pressure comparing step (S3) that the pressure (p_p1) of the first pump 310 is greater than the reference pressure.

Also, the logic may be formed such that, when the first pump output calculating step (S4) is not performed, the output (P1 Power) required for the first pump 310 is considered to be less than the output (P2 Power) required for the second pump 320 in the pump output comparing step (S7), and the first merging line 930 is closed and the second merging line 940 is opened in the merging line selecting step (S9).

Also, the logic includes a mode checking step (S8) of checking whether the operator has selected the regeneration mode between the pump output comparing step (S7) and the merging line selecting step (S9). The logic may be formed such that the merging line selecting step (S9) is performed when it is confirmed in the mode checking step (S8) that the regeneration mode has been selected.

Meanwhile, the control unit may be configured to activate the regeneration line Reg when an operator has an intention to activate the regeneration line Reg, a situation allows for the activation of the regeneration line Reg, and an operation to be performed is an operation having high regeneration efficiency.

Specifically, an operation frequently used by a user includes a boom-down operation in which the piston 220 is moved toward the head chamber 240 and the boom actuator 200 is contracted.

Referring to FIG. 8, when the operator selects the normal mode and performs the boom-down operation, fluid in the head chamber 240 may flow to the main control valve 400 through the head line 710 by a load of the boom Bm applied through the rod 230, and then be discharged to the tank T through the drain line Dr. As fluid discharged from the second pump 320 flows into the rod chamber 250 through the second pump line 520, the main control valve 400, and the rod line 720, cavitation in the rod chamber 250 may be prevented.

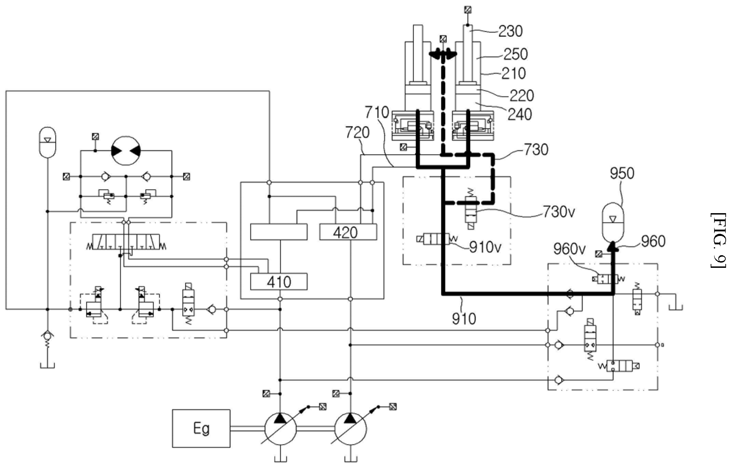

On the other hand, referring to FIGS. 9 to 11, when the operator selects the regeneration mode and performs a boom-down operation, the cavitation valve 730v opens the cavitation line 730. Consequently, a portion of the fluid in the head line 710 flows to the rod line 720 through the cavitation line 730, thereby preventing cavitation in the rod chamber 250. In this case, since it is not necessary to drive the second pump 320 to prevent cavitation in the rod chamber 250, fuel efficiency can be improved compared to the case of FIG. 8.

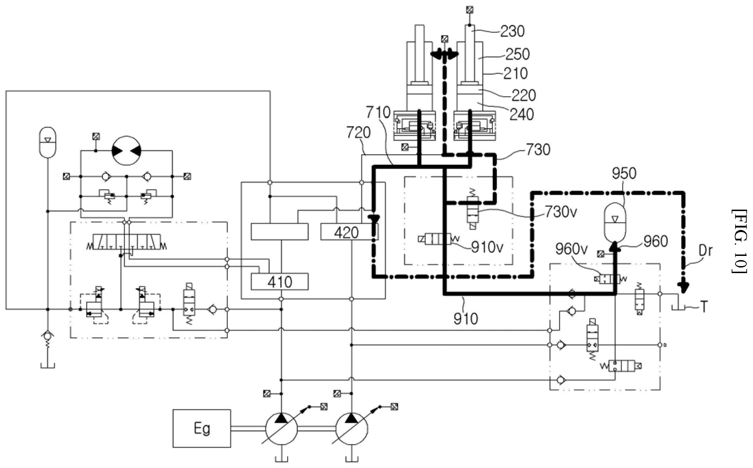

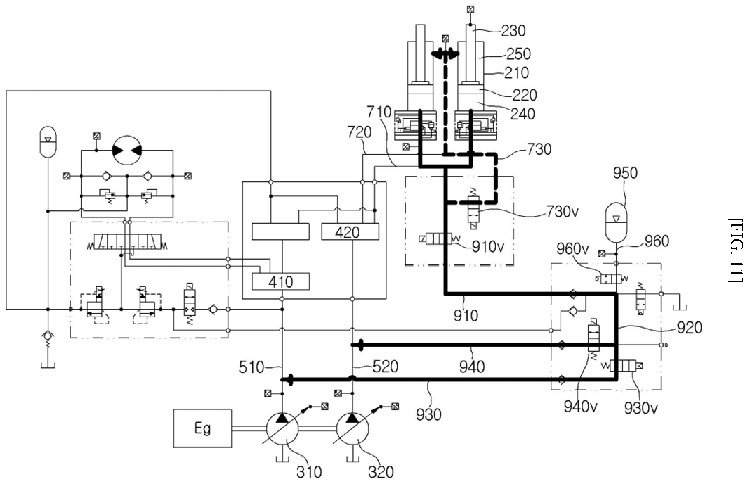

Further, the boom regeneration valve 910v opens the boom regeneration line 910, and the remainder of the fluid in the head line 710 flows to the terminal line 920 through the boom regeneration line 910. This fluid is then either stored in the high-pressure accumulator 950 or directed to the pump line 500. Specifically, as shown in FIGS. 9 and 10, the high-pressure accumulator valve 960v opens the high-pressure accumulator line 960 so that at least a portion of the fluid in the terminal line 920 is stored in the high-pressure accumulator 950, and the stored fluid can be discharged later. Alternatively, as shown in FIG. 11, when fluid cannot be stored in the high-pressure accumulator 950 or a flow rate required for the pump line 500 is large, the high-pressure accumulator valve 960v closes the high-pressure accumulator line 960, and the merging valve opens the merging line, allowing at least a portion of the fluid in the terminal line 920 to flow to the pump line 500 through the merging line. By regenerating the fluid of the boom line 700 in this manner, fuel efficiency and/or performance can be improved compared to the case of FIG. 8. Here, in the case of FIG. 10, when fluid cannot be stored in the high-pressure accumulator 950, the fluid in the head line 710 is discharged to the tank T through the main control valve and the drain line Dr. This prevents the speed of the boom actuator 200 from becoming slower than a target speed when regenerating the fluid of the boom line 700.

An operation frequently used by the user is a boom-up operation, in which the piston 220 moves toward the rod chamber 250 and the boom actuator 200 extends.

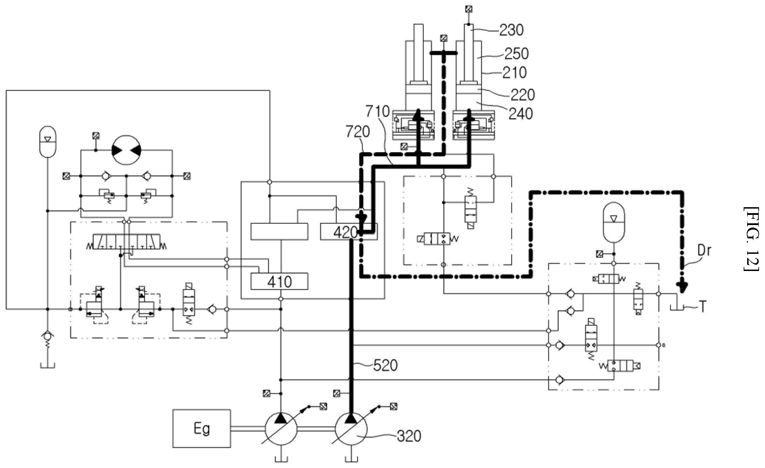

Referring to FIG. 12, when the operator selects the normal mode and performs the boom-up operation, fluid discharged from the second pump 320 flows into the head chamber 240 through the second pump line 520, the main control valve 400, and the head line 710. Meanwhile, fluid in the rod chamber 250 flows to the main control valve 400 through the rod line 720 and is then discharged to the tank T through the drain line Dr.

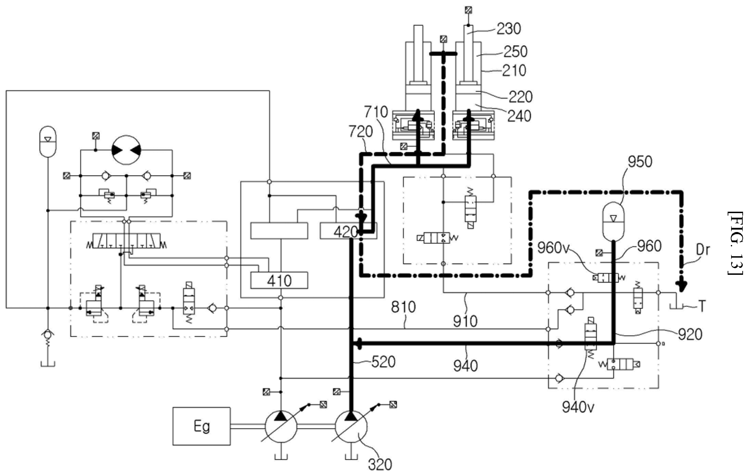

On the other hand, referring to FIG. 13, when the operator selects the regeneration mode and performs the boom-up operation, the high-pressure accumulator valve 960v opens the high-pressure accumulator line 960, and the second merging valve 940v opens the second merging line 940. Accordingly, fluid in the high-pressure accumulator 950 flows to the second pump line 520 through the high-pressure accumulator line 960, the terminal line 920, and the second merging line 940. The main control valve 400 then transfers the fluid, received from both the second pump 320 and the second merging line 940 through the second pump line 520, to the head chamber 240 through the head line 710. Simultaneously, fluid in the rod chamber 250 flows to the main control valve 400 through the rod line 720 and is discharged to the tank T through the drain line Dr. In this case, fuel efficiency and/or performance can be improved compared to the case of FIG. 12 by using the fluid stored in the high-pressure accumulator 950 to assist the second pump 320.

Other frequently used operations include a swing-acceleration operation, where the swing actuator 100 accelerates, and a swing-deceleration operation, where the swing actuator 100 decelerates.

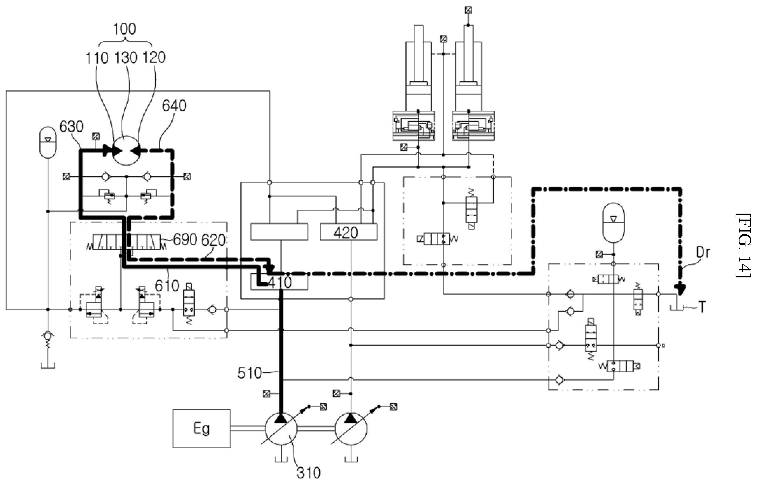

Referring to FIG. 14, when the operator selects the normal mode and performs a swing-acceleration operation, the main control valve 400 provides communication between the first pump line 510 and the first swing line 610 and between the second swing line 620 and the drain line Dr. The swing direction control valve 690 provides communication between the first swing line 610 and the third swing line 630 and between the fourth swing line 640 and the second swing line 620. Thus, fluid discharged from the first pump 310 sequentially passes through the first pump line 510, the main control valve 400, the first swing line 610, the swing direction control valve 690, the third swing line 630, the first opening 110, the second opening 120, the fourth swing line 640, the swing direction control valve 690, the second swing line 620, the main control valve 400, and the drain line Dr before being discharged to the tank T, causing the rotor 130 to accelerate in one direction.

Although not shown, when the main control valve 400 provides communication between the first pump line 510 and the second swing line 620 and provides communication between the first swing line 610 and the drain line Dr, and the swing direction control valve 690 provides communication between the second swing line 620 and the fourth swing line 640 and provides communication between the third swing line 630 and the first swing line 610, the fluid discharged from the first pump 310 sequentially passes through the first pump line 510, the main control valve 400, the second swing line 620, the swing direction control valve 690, the fourth swing line 640, the second opening 120, the first opening 110, the third swing line 630, the swing direction control valve 690, the first swing line 610, the main control valve 400, and the drain line Dr to be discharged to the tank T, and the rotor 130 may be accelerated and rotated in an opposite direction.

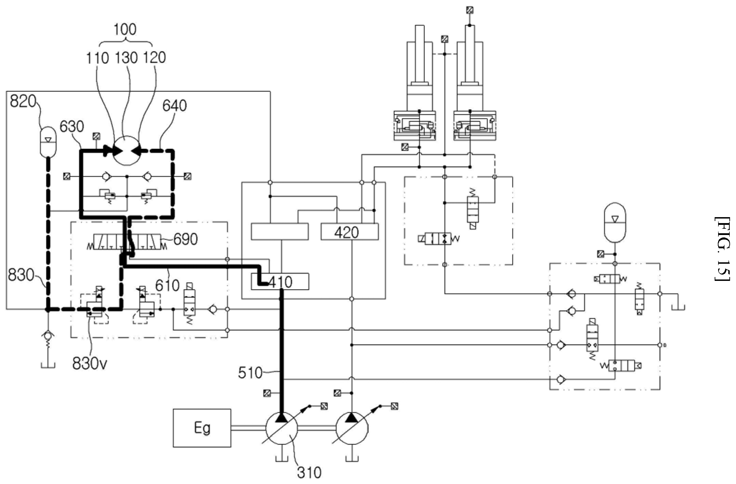

On the other hand, referring to FIG. 15, when the operator selects the regeneration mode and performs a swing-acceleration operation, the main control valve 400 provides communication between the first pump line 510 and the first swing line 610. The swing direction control valve 690 provides communication between the first swing line 610 and the third swing line 630 and provides communication between the fourth swing line 640 and the swing regeneration line 810. The low-pressure accumulator valve 830v opens the low-pressure accumulator line 830. Accordingly, fluid discharged from the first pump 310 sequentially passes through the first pump line 510, the main control valve 400, the first swing line 610, the swing direction control valve 690, the third swing line 630, the first opening 110, the second opening 120, the fourth swing line 640, the swing direction control valve 690, the swing regeneration line 810, and the low-pressure accumulator line 830 to be stored in the low-pressure accumulator 820. Thus, the rotor 130 may be accelerated and rotated in one direction.

Although not shown, when the main control valve 400 provides communication between the first pump line 510 and the second swing line 620, and the swing direction control valve 690 provides communication between the second swing line 620 and the fourth swing line 640 and between the third swing line 630 and the swing regeneration line 810, the low-pressure accumulator valve 830v opens the low-pressure accumulator line 830. The fluid discharged from the first pump 310 sequentially passes through the first pump line 510, the main control valve 400, the second swing line 620, the swing direction control valve 690, the fourth swing line 640, the second opening 120, the first opening 110, the third swing line 630, the swing direction control valve 690, the swing regeneration line 810, and the low-pressure accumulator line 830 to be stored in the low-pressure accumulator 820. Consequently, the rotor 130 may be accelerated and rotated in the opposite direction.

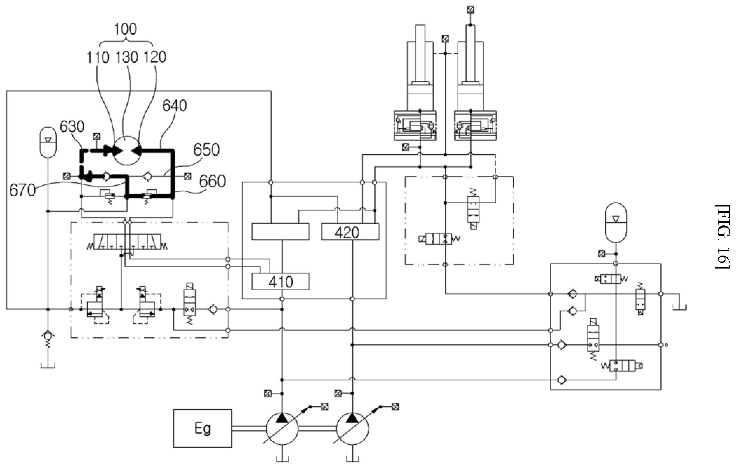

Referring to FIG. 16, when the operator selects the normal mode and performs a swing-deceleration operation, fluid discharged from the second opening 120 sequentially passes through the fourth swing line 640, the sixth swing line 660, the seventh swing line 670, the fifth swing line 650, and the third swing line 630. The fluid then flows into the first opening 110, and the rotor 130 may be decelerated and rotated in one direction.

Although not shown, when fluid discharged from the first opening 110 sequentially passes through the third swing line 630, the sixth swing line 660, the seventh swing line 670, the fifth swing line 650, and the fourth swing line 640, and flows into the second opening 120, the rotor 130 may be decelerated and rotated in the opposite direction.

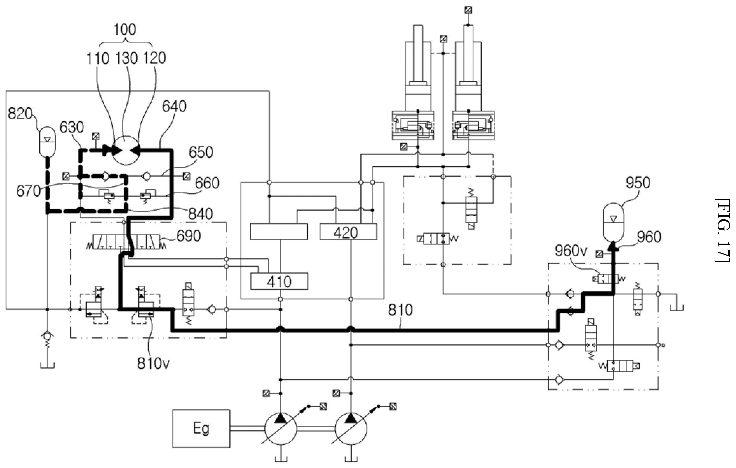

On the other hand, referring to FIG. 17, when the operator selects the regeneration mode and performs the swing-deceleration operation, the swing direction control valve 690 provides communication between the fourth swing line 640 and the swing regeneration line 810. The swing regeneration valve 810v opens the swing regeneration line 810, and the high-pressure accumulator valve 960v opens the high-pressure accumulator line 960. Fluid discharged from the second opening 120 sequentially passes through the fourth swing line 640, the swing direction control valve 690, the swing regeneration line 810, the terminal line 920, and the high-pressure accumulator line 960 to be stored in the high-pressure accumulator 950. The rotor 130 may be decelerated and rotated in one direction. At this time, the low-pressure accumulator valve 830v closes the low-pressure accumulator line 830, and fluid in the low-pressure accumulator 820 may flow to a suction line of the swing actuator 100 among the swing lines 600 through the make-up line 840.

Although not shown, when the swing direction control valve 690 provides communication between the third swing line 630 and the swing regeneration line 810, and the swing regeneration valve 810v and the high-pressure accumulator valve 960v open their respective lines, the fluid discharged from the first opening 110 sequentially passes through the corresponding lines to be stored in the high-pressure accumulator 950. Thus, the rotor 130 may be decelerated and rotated in the opposite direction.

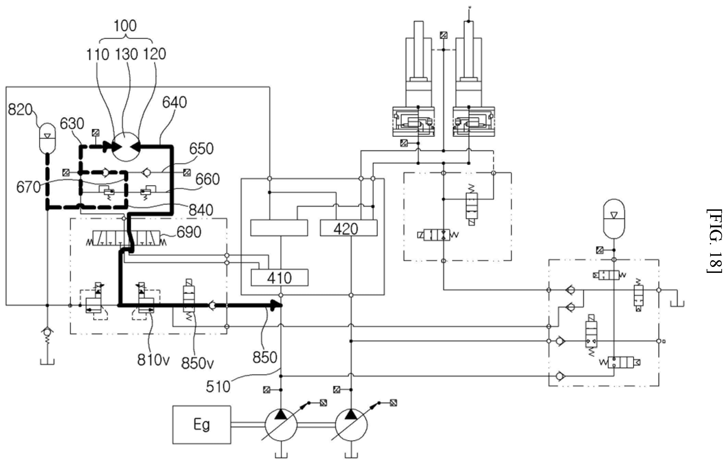

Meanwhile, as shown in FIG. 18, when fluid cannot be stored in the high-pressure accumulator 950 or a large flow rate is required for the first pump line 510, the third merging valve 850v opens the third merging line 850. This allows fluid in the swing regeneration line 810 to flow into the first pump line 510.

As shown in FIGS. 15, 17, and 18, by regenerating fluid in the swing line 600 when accelerating or decelerating a swing in the regeneration mode, fuel efficiency and/or performance can be improved compared to the case where a swing is accelerated or decelerated in the normal mode as shown in FIGS. 14 and 16.

Another frequently used operation is a jack-up operation, in which the construction machine is lifted by pressing the ground with the bucket Bk. During a jack-up operation, the pressure in the rod chamber 250 must rise rapidly while the fluid in the head chamber 240 must decrease rapidly; thus, it may be a difficult condition to implement the regeneration mode.

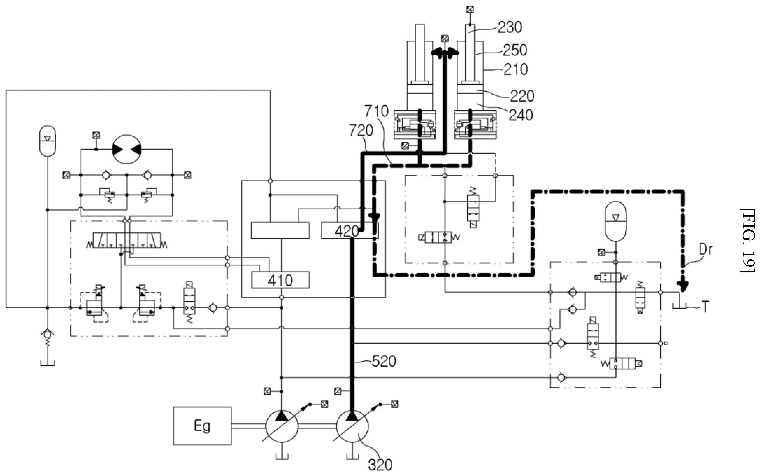

Accordingly, when a jack-up operation is executed, the mode is forcibly switched to the normal mode even if the operator has selected the regeneration mode. As shown in FIG. 19, fluid discharged from the second pump 320 sequentially passes through the second pump line 520, the main control valve 400, and the rod line 720 to flow into the rod chamber 250. Simultaneously, fluid from the head chamber 240 sequentially passes through the head line 710, the main control valve 400, and the drain line Dr to be discharged to the tank T.

Once the jack-up operation stops, the system can switch back to the regeneration mode originally selected by the operator.

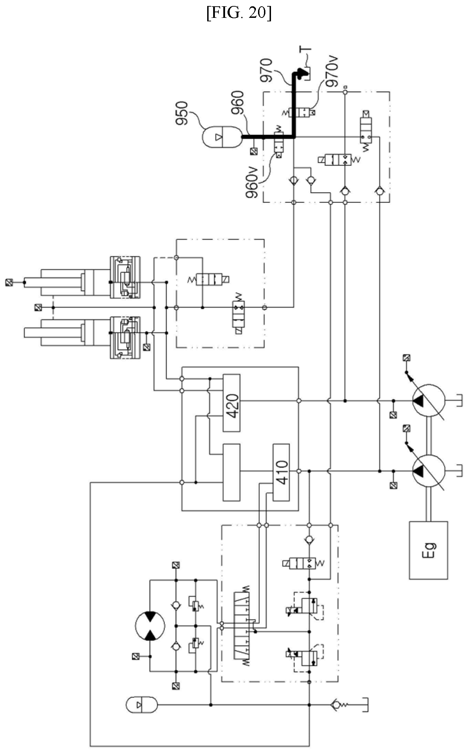

Meanwhile, when the operator selects the normal mode or performs a key-off, the high-pressure accumulator valve 960v opens the high-pressure accumulator line 960 and the safety valve 970v opens the safety line 970 as shown in FIG. 20. This allows fluid from the high-pressure accumulator 950 to be discharged to the tank T, thereby securing system safety.

By including the hydraulic circuit with the regeneration line Reg and the control unit for controlling it, the construction machine according to the present embodiment can improve fuel efficiency and/or performance by regenerating fluid from at least one of the swing line 600 and the boom line 700.

Furthermore, because the hydraulic circuit and the control unit are configured to determine the pump flow rate (Q_p1, Q_p2) from the difference between the supply flow rate (Q_s1, Q_s2) and the regeneration flow rate (Q_r1, Q_r2) determined by the mode, it is possible to focus on improving fuel efficiency, focus on improving performance, or improve both at a desired ratio.

The hydraulic circuit and the control unit are also configured to activate the regeneration line Reg when the operator intends to activate it, the situation allows for activation, and the operation being performed has high regeneration efficiency. This allows fuel efficiency and/or performance to be improved effectively and efficiently.

Additionally, the hydraulic circuit and the control unit are configured to open whichever of the first merging line 930 and the second merging line 940 has higher regeneration efficiency, thereby maximizing fuel efficiency and/or performance improvements.

Meanwhile, the fuel efficiency improvement rate can vary depending on the conditions under which fluid stored in the high-pressure accumulator 950 is merged into the pump line 500. For example, if fluid stored in the high-pressure accumulator 950 merges into the pump line 500 while an operation primarily used by the operator is being performed, fuel efficiency can be improved.

In consideration of this, it may be preferable for the control unit to be configured to open and close the high-pressure accumulator line 960, the terminal line 920, the first merging line 930, and the second merging line 940 (hereinafter referred to as merging flow paths 920, 930, 940, 960) so that a predetermined flow rate flows from the high-pressure accumulator 950 to the pump line 500 under predetermined conditions.

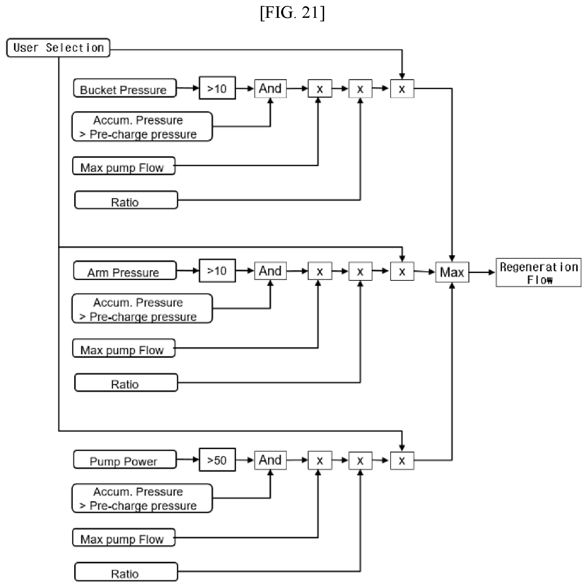

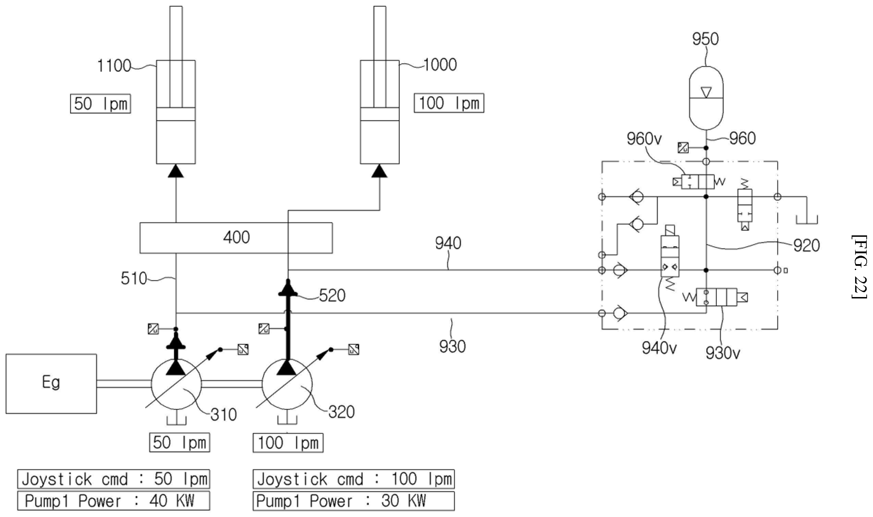

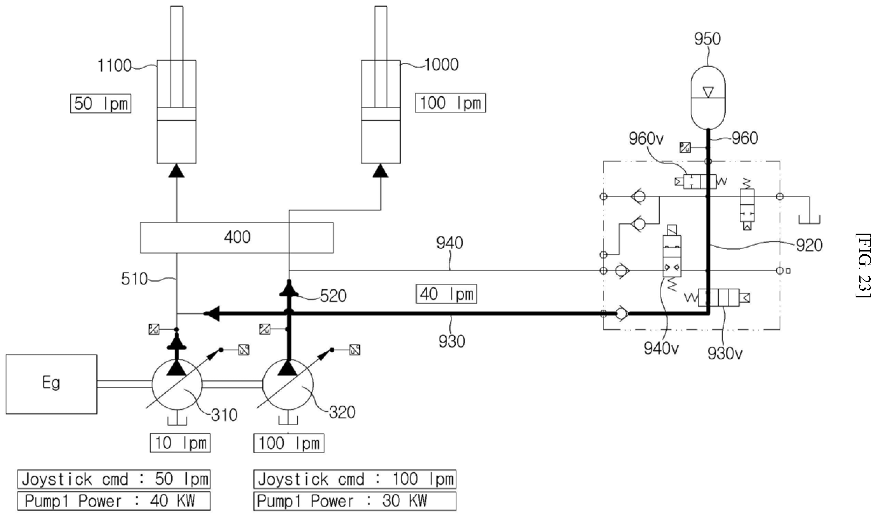

FIG. 21 is a flowchart illustrating logic for determining conditions and flow rates for merging fluid into a pump in a hydraulic circuit of a construction machine according to another embodiment of the present disclosure. FIG. 22 is a schematic diagram explaining the operating principle of a hydraulic circuit controlled according to the logic of FIG. 21, showing the flow rate when merging does not occur because the pump output is small. FIG. 23 is a schematic diagram explaining the operating principle of the hydraulic circuit controlled according to the logic of FIG. 21, showing the flow rate when the pump output is small but the operator desires merging to occur when a bucket actuator is operated.

Referring to FIGS. 21 to 23, a construction machine according to another embodiment of the present disclosure may include a hydraulic circuit similar to that of the above-described embodiment.

Here, the hydraulic circuit further includes other actuators such as an arm actuator 1000 for rotating an arm Am and a bucket actuator 1100 for rotating a bucket Bk, in addition to the swing actuator 100 and the boom actuator 200. These other actuators may also communicate with the pump line 500 through the main control valve 400.

An operator selects a target actuator from a plurality of actuators through a target actuator selector. The control unit may be configured to open the merging flow paths 920, 930, 940, and 960 when the target actuator is operated under predetermined conditions. Specifically, in the present embodiment, the operator may determine that operations using the arm actuator 1000 and the bucket actuator 1100 are mainly used operations and select them as the target actuators. The control unit may be configured to store fluid of at least one of the swing line 600 and the boom line 700 in the high-pressure accumulator 950 and then open the merging flow paths 920, 930, 940, and 960 when at least one of the arm actuator 1000 and the bucket actuator 1100 is used.

It is not preferable for the merging flow paths 920, 930, 940, and 960 to be opened unconditionally just because the arm actuator 1000 or the bucket actuator 1100 is used, especially under conditions where fuel efficiency is not improved. Accordingly, as shown in FIG. 21, it may be preferable for the control unit to be configured to control the merging flow paths 920, 930, 940, and 960 by comprehensively considering an output of the pump unit 300, a pressure of the target actuator, a pressure of the high-pressure accumulator 950, and the selection of the operator.

Specifically, the control unit may be configured to open the merging flow paths 920, 930, 940, and 960 when the output of the pump unit 300 is greater than a predetermined reference output (e.g., 50 kw).

Furthermore, the control unit may be configured to open the merging flow paths 920, 930, 940, and 960 when the pressure of the target actuator is greater than a predetermined reference pressure (e.g., 10 bar).

Additionally, the control unit may be configured to open the merging flow paths 920, 930, 940, and 960 when the pressure of the high-pressure accumulator 950 is greater than a predetermined value.

The operator sets a predetermined ratio for each of the target actuator and the pump unit 300. The control unit may be configured to control the merging flow paths 920, 930, 940, and 960 so that a maximum value among calculated flow rates, obtained by multiplying the ratio by a maximum flow rate that may flow from the high-pressure accumulator 950 to the pump line 500, is directed to flow from the high-pressure accumulator 950 to the pump line 500.

When the target actuator includes a first target actuator communicating with the first pump line 510 and a second target actuator communicating with the second pump line 520, the operator sets a first ratio for the first target actuator, a second ratio for the second target actuator, a third ratio for the first pump 310, and a fourth ratio for the second pump 320. The control unit may be configured to calculate: a first calculated flow rate by multiplying a maximum flow rate that may flow from the high-pressure accumulator 950 to the first pump line 510 for the operation of the first target actuator by the first ratio; a second calculated flow rate by multiplying a maximum flow rate that may flow from the high-pressure accumulator 950 to the second pump line 520 for the operation of the second target actuator by the second ratio; a third calculated flow rate by multiplying a maximum flow rate that may flow from the high-pressure accumulator 950 to the first pump line 510 for the operation of the first pump 310 by the third ratio; and a fourth calculated flow rate by multiplying a maximum flow rate that may flow from the high-pressure accumulator 950 to the second pump line 520 for the operation of the second pump 320 by the fourth ratio.

The control unit may be configured to control the first merging line 930 and the second merging line 940 so that the maximum value among the first to fourth calculated flow rates flows from the high-pressure accumulator 950 to the pump line 500.

That is, the control unit controls: the first calculated flow rate to flow through the first merging line 930 when the maximum value is the first calculated flow rate; the second calculated flow rate to flow through the second merging line 940 when the maximum value is the second calculated flow rate; the third calculated flow rate to flow through the first merging line 930 when the maximum value is the third calculated flow rate; and the fourth calculated flow rate to flow through the second merging line 940 when the maximum value is the fourth calculated flow rate.

According to this configuration, for example, in the situation of FIG. 22, even if commands are input to the bucket actuator 1100 and the arm actuator 1000 through a joystick, the merging flow paths 920, 930, 940, and 960 may be closed if the output of the pump unit 300 is lower than the reference output (corrected from "reference pressure" in original text based on context of [5]).

Alternatively, in the situation of FIG. 23, even if the output of the pump unit 300 is lower than the reference output, the first merging line 930 may be opened and the second merging line 940 may be closed if the operator desires regeneration to forcibly occur when the bucket actuator 1100 is operated. Here, the flow rate flowing to the first pump line 510 through the first merging line 930 is determined according to the logic of FIG. 21, and 40 lpm is merely an example.

Here, fluid from the high-pressure accumulator 950 does not merge into the pump line 500 simply because the target actuator is operated. Instead, it merges when it is determined that a flow rate is required from the perspective of the entire equipment. Accordingly, for example, when a user operates the bucket Bk, a smooth movement of the entire equipment may be felt rather than an effect where only the bucket Bk moves well.

## Claims

1. A construction machine comprising:
a pump unit connected to an engine;
a pump line through which a flow rate is discharged from the pump unit;
a main control valve configured to provide communication between the pump line and a plurality of actuators;
a regeneration line configured to provide communication between at least one of the plurality of actuators and the pump line; and
a control unit configured to determine a regeneration flow rate of the regeneration line according to a mode and control the pump unit.

2. The construction machine of claim 1, wherein the plurality of actuators includes a swing actuator and a boom actuator,
wherein a swing line providing communication between the main control valve and the swing actuator and a boom line providing communication between the main control valve and the boom actuator are provided, and
wherein the regeneration line is configured to provide communication between at least one of the swing line and the boom line and the pump line.

3. The construction machine of claim 2, wherein a flow rate of fluid supplied to the main control valve through the pump line is a supply flow rate, a flow rate of fluid supplied by the pump unit to the pump line is a pump flow rate, and a flow rate of fluid supplied to the pump line through the regeneration line is the regeneration flow rate, and
wherein the control unit is configured to determine the pump flow rate from a difference between the supply flow rate and the regeneration flow rate, which are determined according to a mode, and to control to drive the pump unit.

4. The construction machine of claim 2, wherein the supply flow rate, which is the flow rate of fluid supplied to the main control valve through the pump line, is a sum of a basic supply flow rate determined according to an input value of an operator and an additional supply flow rate which is a flow rate exceeding the basic supply flow rate.

5. The construction machine of claim 2, wherein the additional supply flow rate is determined by multiplying a maximum regeneration flow rate, which is a maximum value of the regeneration flow rate, by a predetermined performance constant, and
wherein the performance constant is determined in a range of 0 to 1 according to the mode.

6. The construction machine of claim 2, wherein, in a case of a normal mode, the regeneration line is deactivated, and
wherein, in a case of a regeneration mode, the regeneration line is activated.

7. The construction machine of claim 2, wherein, in a case of a fuel efficiency mode, the regeneration flow rate of the regeneration line is increased, and the pump flow rate supplied by the pump unit to the pump line is decreased based on the increased regeneration flow rate.

8. The construction machine of claim 2, wherein, in a case of a performance mode, the regeneration flow rate of the regeneration line is increased, and the pump flow rate supplied by the pump unit to the pump line is maintained.

9. The construction machine of claim 2, wherein, in a case of a combined mode, the regeneration flow rate of the regeneration line is increased and the pump flow rate supplied by the pump unit to the pump line is decreased according to a ratio determined in the combined mode.

10. The construction machine of claim 3, wherein the regeneration flow rate is determined by multiplying the maximum regeneration flow rate, which is a maximum value of the regeneration flow rate, by a predetermined regeneration constant, and
wherein the regeneration constant is determined in a range of 0 to 1 according to the mode.

11. The construction machine of claim 10, wherein, in a case of the normal mode, the regeneration constant is determined to be 0, and
wherein, in a case of the regeneration mode, the regeneration constant is determined as a maximum value currently possible in a range of 0 to 1.

12. The construction machine of claim 1, wherein the regeneration line includes a high-pressure accumulator for storing and discharging fluid and a merging flow path configured to provide communication between the high-pressure accumulator and the pump line, and
wherein the control unit is configured to open and close the merging flow path such that a predetermined flow rate flows from the high-pressure accumulator to the pump line under predetermined conditions.

13. The construction machine of claim 12, wherein an operator selects a target actuator from the plurality of actuators, and
wherein the control unit is configured to open the merging flow path when the target actuator is operated under predetermined conditions.

14. The construction machine of claim 13, wherein the merging flow path is opened when a pressure of the target actuator is greater than a predetermined reference pressure,
wherein the merging flow path is opened when the pressure of the target actuator is equal to or less than the predetermined reference pressure and an output of the pump unit is greater than a predetermined reference output, and
wherein the merging flow path is opened when a pressure of the high-pressure accumulator is greater than a predetermined value.

15. The construction machine of claim 13, wherein the operator sets a predetermined ratio for each of the target actuator and the pump unit, and
wherein the control unit is configured to control the merging flow path such that a maximum value among calculated flow rates, obtained by multiplying the ratio by a maximum flow rate that may flow from the high-pressure accumulator to the pump line, flows from the high-pressure accumulator to the pump line.

16. The construction machine of claim 15, wherein the pump unit includes a first pump and a second pump,
wherein the pump line includes a first pump line communicating with the first pump and a second pump line communicating with the second pump,
wherein the target actuator includes a first target actuator communicating with the first pump line and a second target actuator communicating with the second pump line, and
wherein the merging flow path includes a first merging line communicating with the first pump line and a second merging line communicating with the second pump line.

17. The construction machine of claim 16, wherein a first ratio for the first target actuator, a second ratio for the second target actuator, a third ratio for the first pump, and a fourth ratio for the second pump are set by the operator, and
wherein the control unit is configured to calculate: a first calculated flow rate obtained by multiplying a maximum flow rate that may flow from the high-pressure accumulator to the first pump line for the operation of the first target actuator by the first ratio; a second calculated flow rate obtained by multiplying a maximum flow rate that may flow from the high-pressure accumulator to the second pump line for the operation of the second target actuator by the second ratio; a third calculated flow rate obtained by multiplying a maximum flow rate that may flow from the high-pressure accumulator to the first pump line for the operation of the first pump by the third ratio; and a fourth calculated flow rate obtained by multiplying a maximum flow rate that may flow from the high-pressure accumulator to the second pump line for the operation of the second pump by the fourth ratio.

18. The construction machine of claim 17, wherein the control unit is configured to control the first merging line and the second merging line such that a maximum value among the first calculated flow rate, the second calculated flow rate, the third calculated flow rate, and the fourth calculated flow rate flows from the high-pressure accumulator to the pump line.

19. The construction machine of claim 18, wherein the control unit is configured to control the first calculated flow rate to flow through the first merging line when the maximum value is the first calculated flow rate, to control the second calculated flow rate to flow through the second merging line when the maximum value is the second calculated flow rate, to control the third calculated flow rate to flow through the first merging line when the maximum value is the third calculated flow rate, and to control the fourth calculated flow rate to flow through the second merging line when the maximum value is the fourth calculated flow rate.

20. The construction machine of claim 1, wherein the regeneration line includes a high-pressure accumulator for storing and discharging fluid and a merging flow path configured to provide communication between the high-pressure accumulator and the pump line,
wherein a target actuator selector through which an operator selects a target actuator from the plurality of actuators is provided, and
wherein the control unit is configured to open and close the merging flow path such that fluid of the high-pressure accumulator flows to the pump line based on a total flow rate required by the pump unit when the target actuator is operated.
